# FASCICULE DE BREVET EUROPEEN

(11) **EP 3 542 497 B1**
(45) Date de publication et mention de la délivrance du brevet: **11.06.2025**
(21) Numéro de dépôt: 17804638.9
(22) Date de dépôt: 17.11.2017
(51) Int. Cl.: H04L 12/46, H04L 51/02

(54) **PROCÉDÉ D'ORGANISATION D'UNE PLURALITÉ DE MESSAGES ÉCHANGÉS AVEC UN AGENT CONVERSATIONNEL**
VERFAHREN ZUR ORGANISATION EINER VIELZAHL VON MIT EINEM GESPRÄCHSAGENT AUSGETAUSCHTEN NACHRICHTEN
METHOD FOR ORGANISING A PLURALITY OF MESSAGES EXCHANGED WITH A CONVERSATIONAL AGENT

(30) Priorité: 18.11.2016 FR 1661217
(43) Date de publication de la demande: 25.09.2019
(73) Titulaire: Orange, 92130 Issy-les-Moulineaux (FR)
(72) Inventeur: LE HUEROU, Emmanuel, 92326 Châtillon Cedex (FR); TOUTAIN, François, 92326 Châtillon Cedex (FR); BEAUFILS, Eric, 92326 Châtillon Cedex (FR); BEGOC BECAM, Nathalie, 92326 Châtillon Cedex (FR)
(86) Numéro de dépôt international: PCT/FR2017/053151
(87) Numéro de publication internationale: WO 2018/091843

(56) Documents cités:
- EP-A1- 2 487 633
- US-A1- 2004 030 750
- US-A1- 2014 143 684

## Description

### Domaine technique

La présente invention se rapporte au domaine des télécommunications et porte plus particulièrement sur un procédé de restitution d'une pluralité de messages échangés entre un terminal et un dispositif de communication.

### Art antérieur

Les communications de type messagerie instantanée connaissent un fort engouement de la part du public depuis quelques années. En effet, ce mode de communication offre plus d'interactivité qu'une communication par courrier électronique tout en étant moins intrusif qu'une communication vocale. L'adoption massive de ce mode de communication et l'arrivée sur le marché de terminaux mobiles à écran tactile s'est accompagnée d'une évolution des interfaces utilisateurs permettant de faciliter ce mode de communication. Ainsi, les interfaces utilisateurs convergent aujourd'hui vers une vue conversationnelle dans laquelle les messages émis et les messages reçus sont présentés dans des bulles disposées de part et d'autre de l'écran du terminal et ordonnées de manière chronologique. A quelques exceptions près, ce type de présentation sous forme de conversation est prédominant sur la plupart des terminaux et des applications de messagerie, toutes marques confondues.

Ce type de communication est à tel point plébiscité qu'il n'est aujourd'hui plus réservé aux échanges entre personnes physiques. En effet, il est possible aujourd'hui d'échanger des messages avec des robots logiciels capables d'interpréter des messages envoyés par des utilisateurs et d'y répondre de manière plus ou moins pertinente. On peut citer par exemple des robots spécialisés dans les prévisions météorologiques capables de répondre à des messages du type « *quel temps fera-t-il demain à Paris ?* ». Ainsi, un utilisateur dispose d'une interface unifiée pour communiquer avec d'autres utilisateurs et accéder à des services. Ce type de robot capable d'interagir avec des utilisateurs en échangeant des messages est parfois appelé « *agent conversationnel ».*

L'usage de ce type de communication s'élargi encore aujourd'hui avec l'avènement du *« commerce conversationnel ».* Le commerce conversationnel met en œuvre des robots adaptés pour permettre à des utilisateurs d'effectuer des commandes de biens ou de services. Ainsi, les utilisateurs n'ont plus besoin de télécharger une application dédiée ou d'accéder à un site Web pour passer commande, et le fournisseur de service n'a pas besoin d'éditer et de maintenir une application ou un site Web.

Bien que ce type d'interaction présente comme on l'a vu des avantages indéniables, notamment pour les utilisateurs en termes d'unicité de l'expérience utilisateur et de réduction du nombre d'applications nécessaires pour accéder aux services, la présentation des échanges de messages sous forme de conversation telle qu'elle est mis en œuvre aujourd'hui sur une majorité de terminaux pose certains problèmes.

En particulier, ce mode de communication n'est pas toujours adapté aux échanges avec des agents conversationnels. Par exemple pour souscrire à un service ou effectuer une commande auprès d'un fournisseur au travers d'une interface de commerce conversationnel, il est généralement nécessaire d'échanger plusieurs messages. Ainsi, entre le premier message initiant la transaction et le dernier message la clôturant, une dizaine de messages peuvent avoir été échangés. L'historique des échanges présente généralement peu d'intérêt pour l'utilisateur lorsque la transaction est terminée et que le produit et/ou service a été livré, mais occupent une place inutile dans la mémoire et sur l'écran du terminal. D'autre part, le grand nombre de messages dû à des commandes successives peut entrainer une confusion chez l'utilisateur qui peut avoir du mal à identifier les transactions auxquelles se rapportent les messages..

On connait des techniques permettant d'optimiser une telle vue conversationnelle des échanges, comme par exemple la technique exposée dans la demande de brevet US 2014/0143684 A1 qui permet de répondre à un message selon un contexte de conversation particulier. Ainsi, un message de réponse peut être lié à un message reçu de façon à limiter le risque de confusion de l'utilisateur lors d'échanges croisés.

Une telle technique permet d'améliorer la lisibilité pour l'utilisateur, mais elle ne modifie pas le nombre des messages mémorisés et/ou affichés sur le terminal. Ainsi, des messages inutiles continuent à occuper de l'espace d'affichage sur l'écran et/ ou de l'espace mémoire du terminal.

Le protocole SMS offre la possibilité de concaténer différents messages afin d'en afficher un seul. Pour cela, le terminal émetteur place un entête « UDH » (pour User Data Header) dans le message SMS, l'entête comprenant un numéro de référence qui doit être le même dans les différents messages à concaténer. Le terminal récepteur assemble les différents messages reçus comportant le même numéro de référence pour n'en afficher qu'un seul. Une telle technique permet de palier la limite de 160 caractères imposée par le protocole SMS. Toutefois, une telle technique permet uniquement la concaténation de SMS consécutifs et ne permet pas d'optimiser de manière satisfaisante la présentation d'une conversation comprenant des messages émis et reçus.

Une autre technique consiste à n'afficher que le dernier message reçu et/ou émis d'une conversation, en association avec le nom du correspondant.

Toutefois, le dernier message échangé dans une conversation n'est pas toujours représentatif des messages échangés au cours de la conversation.

Il existe donc un besoin pour optimiser la gestion des messages lors de communications avec un agent conversationnel au travers d'une application de messagerie instantanée.

### Résumé de l'invention

A cet effet, l'invention concerne un procédé d'organisation d'une pluralité de messages d'une conversation de messagerie instantanée entre un terminal et un agent conversationnel le procédé étant remarquable en ce qu'un message comprend un identifiant de regroupement et que le procédé comporte les étapes suivantes lorsqu'un nouveau message est échangé:
- sélection, parmi les messages de la conversation, d'au moins un message dont l'identifiant de regroupement correspond à l'identifiant de regroupement du message échangé,
Lorsqu'au moins un message est sélectionné :
- Modification d'au moins une zone d'affichage sur l'écran du terminal correspondant à au moins un des messages sélectionnés, selon au moins une caractéristique du message échangé.

Lorsqu'un nouveau message est envoyé ou reçu, le procédé propose de modifier l'affichage d'au moins un message qui a un identifiant commun avec ce nouveau message. La modification de l'affichage est réalisée en fonction d'une caractéristique du message échangé. De cette façon, le procédé permet une réorganisation automatique des messages échangés autour d'un même sujet afin par exemple, de limiter l'espace occupé par ces messages lorsqu'ils sont affichés à l'écran.

Dans le cadre de cette description, on entend par agent conversationnel un automate adapté pour répondre automatiquement à des messages envoyés par un utilisateur. Un tel agent conversationnel est notamment adapté pour interpréter des commandes ou des mots clefs compris dans des messages qu'il reçoit. En particulier, un tel agent conversationnel peut être configuré pour permettre à un utilisateur de réaliser une transaction en échangeant des messages à partir d'une messagerie instantanée. De tels agents conversationnels sont généralement mis en œuvre par des programmes informatiques exécutés sur des serveurs disposant d'interfaces de communication adaptées pour recevoir et émettre des messages instantanés, tels que des SMS, MMS ou d'autres types de messages conformes au standard RCS.

Ainsi, lorsqu'un utilisateur réalise une transaction en échangeant des messages avec un agent conversationnel configuré pour le commerce, les messages relatifs à une transaction particulière sont distingués par un identifiant de regroupement. A partir de cet identifiant, le procédé peut réorganiser l'affichage des messages relatif à une transaction particulière. La façon dont les messages sont réorganisés dépend d'une caractéristique d'un message reçu ou envoyé. Une telle caractéristique peut être un mot clef contenu dans le message, un identifiant de l'expéditeur ou du message, la taille du message, son type ou encore par exemple sa date d'expédition.

De manière classique, les applications de messagerie instantanée affichent les messages émis et reçus dans des bulles de conversation. Une telle bulle de conversation correspond à une zone d'affichage d'un message particulier. Le procédé permet la modification de contenu d'une ou plusieurs de ces bulles de conversation.

Selon une réalisation particulière le procédé est tel que l'identifiant de regroupement est associé à une interaction en cours avec l'agent conversationnel ayant émis le message, l'interaction comportant une pluralité d'états successifs.

Un identifiant de regroupement permettant de regrouper des messages échangés est affecté à une interaction particulière entre un utilisateur et un agent conversationnel. Une telle interaction peut correspondre par exemple à une transaction visant à réaliser un achat, une réservation ou la souscription à un service. De telles interactions comprennent une pluralité d'états distincts et requièrent l'échange de différents messages pour être menées à bien. Par exemple, une commande peut être dans un état « reçue », « payée », «en cours de livraison» et « livrée ». Les transitions entre ces états sont provoquées par l'échange de messages particuliers. L'identifiant de regroupement compris dans le message permet d'identifier la transaction à laquelle les messages se rapportent, de sorte qu'il est possible pour un terminal de modifier l'affichage des messages relatifs à une transaction particulière.

Selon un mode particulier de réalisation, le procédé est remarquable en ce que la au moins une caractéristique du message échangé comprend une indication relative à un état d'avancement de l'interaction avec l'agent conversationnel.

De cette façon, un terminal peut modifier la zone d'affichage d'un message selon l'état d'une transaction en cours avec un agent conversationnel. Par exemple, la couleur d'une bulle de conversation peut être modifiée selon l'avancement d'une transaction. Selon un autre exemple, des messages peuvent être supprimés ou regroupés au sein d'une même bulle de conversation lorsqu'une étape particulière d'une interaction en cours est franchie. Par exemple, lorsqu'une réservation atteint l'état « confirmé », les messages précédents relatifs à la sélection d'un horaire peuvent être masqués ou supprimés.

Selon un mode de réalisation particulier, le procédé est tel qu'il comporte en outre une étape de restitution d'une notification sur le terminal, la notification étant restituée selon la au moins une caractéristique du message échangé.

Ainsi le procédé permet de restituer une notification particulière selon au moins une caractéristique du message envoyé ou reçu. Par exemple, une notification sonore particulière peut être restituée lorsqu'un message de confirmation d'une commande est reçu. Une telle disposition permet également la restitution ou non d'une notification visuelle sur un écran associé au terminal, selon une caractéristique du message.

Selon une réalisation particulière, le procédé est tel que la au moins une caractéristique du message échangé comprend une indication selon laquelle le message est le dernier message d'une série de messages associés au même identifiant de regroupement.

La caractéristique du message échangé selon laquelle la zone d'affichage d'un message est modifiée comprend une information précisant qu'il s'agit du dernier message échangé dans le cadre d'une interaction particulière avec l'agent conversationnel. Par exemple, dans le cas d'une réservation effectuée par l'intermédiaire d'une messagerie instantanée, un message de confirmation de cette réservation peut comporter une indication selon laquelle il s'agit du dernier message. Le terminal peut alors modifier l'affichage d'un ou plusieurs messages relatifs à cette réservation.

Selon un mode particulier de réalisation, le procédé est tel que l'étape de modification d'au moins une zone d'affichage comprend le remplacement dans une zone d'affichage d'au moins un message sélectionné par le message échangé.

A la réception ou bien lors de l'envoi d'un nouveau message, au moins un message échangé précédemment et possédant le même identifiant de regroupement est remplacé par le nouveau message. Par exemple, lors d'échanges avec un agent conversationnel, seul le dernier message envoyé et le dernier message reçu sont conservés. Les messages précédents sont masqués ou supprimée. De cette façon, le procédé permet une optimisation de la mémoire et de l'affichage du terminal.

Selon un mode de réalisation particulier, le procédé est tel que l'étape de modification d'au moins une zone d'affichage comprend le masquage des messages sélectionnés, et l'affichage d'un message représentatif des messages masqués.

Le terminal peut ainsi masquer les différents messages échangés lors d'une transaction et afficher une unique bulle de conversation dans laquelle une information représentative de l'état de la commande est affichée. Un tel message représentatif peut être générée dynamiquement par le terminal à partir des messages échangés précédemment comportant le même identifiant de regroupement, correspondre au dernier message reçu ou résulter d'une concaténation de messages reçus précédemment.

Selon une réalisation particulière, le procédé est tel qu'il comporte en outre une étape d'annulation des modifications de la au moins une zone d'affichage lorsqu'une interaction sur une zone d'affichage modifiée est détectée.

Une interaction de l'utilisateur sur une bulle de conversation dans laquelle une information représentative de messages échangés précédemment est affichée permet ainsi de rétablir l'affichage des messages à partir desquels le message représentatif est généré. De cette façon, l'utilisateur du terminal peut choisir de rétablir l'affichage des messages originels en effectuant une action sur un élément d'interface utilisateur associé à une interaction particulière.

Selon un autre aspect, l'invention concerne un dispositif d'organisation d'une pluralité de messages d'une conversation de messagerie instantanée entre un terminal et un agent conversationnel. Un tel dispositif est remarquable en ce qu'il comporte les modules suivants :
- un module de communication, adapté pour envoyer et recevoir des messages comprenant un identifiant de regroupement au travers d'un réseau de communication,
- une mémoire, adaptée pour mémoriser des messages comprenant un identifiant de regroupement,
- un module de sélection mis en œuvre à la réception ou à l'émission d'un nouveau message comprenant un identifiant de regroupement, le module étant adapté pour sélectionner parmi les messages stockés dans la mémoire, au moins un message dont l'identifiant de regroupement correspond à l'identifiant de regroupement du nouveau message, et
- un module d'affichage mis en œuvre lorsqu'au moins un message est sélectionné pour modifier au moins une zone d'affichage sur l'écran du terminal correspondant à au moins un des messages sélectionnés, selon au moins une caractéristique du message échangé.

Selon une réalisation particulière, l'invention concerne un terminal comprenant un dispositif d'organisation tel que décrit ci-dessus.

Dans un mode particulier de réalisation, les différentes étapes du procédé selon l'invention sont déterminées par des instructions de programmes d'ordinateurs.

En conséquence, l'invention vise également un programme d'ordinateur comportant des instructions pour l'exécution des étapes du procédé d'organisation, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes du procédé d'organisation.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé d'organisation tel que défini ci-dessus.

Les terminaux, dispositifs et programmes présentent au moins des avantages analogues à ceux conférés par le procédé d'organisation correspondant.

### Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre une architecture réseau adaptée pour la mise en œuvre de l'invention selon un mode particulier de réalisation de l'invention,
- La figure 2a représente, sous forme d'un chronogramme, des messages échangés entre un terminal et un agent conversationnel pour effectuer une réservation,
- La figure 2b illustre un terminal sur l'écran duquel sont affichés des messages sous forme d'une vue conversationnelle classique,

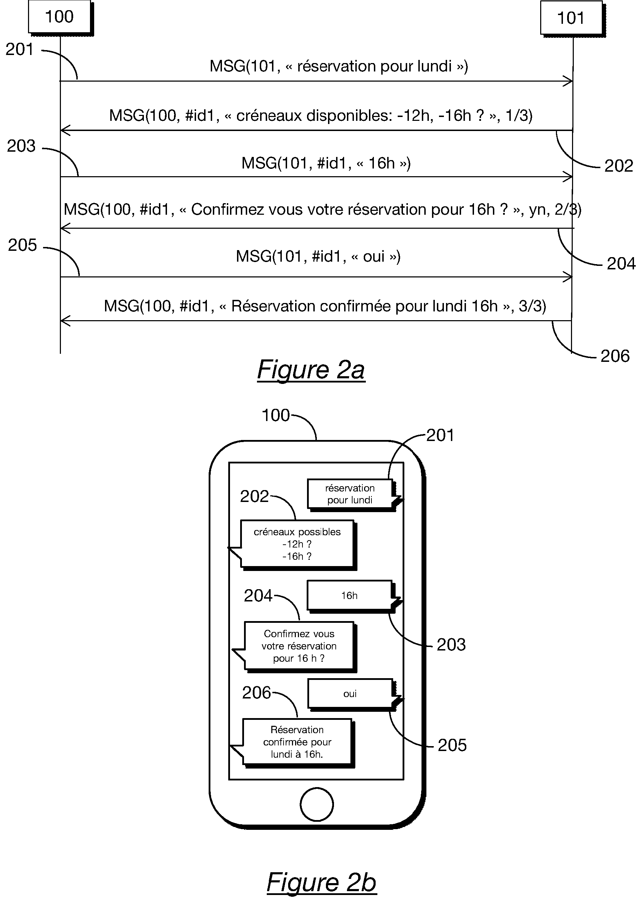

- La figure 2b représente une modification de l'affichage de messages selon une réalisation particulière de l'invention,

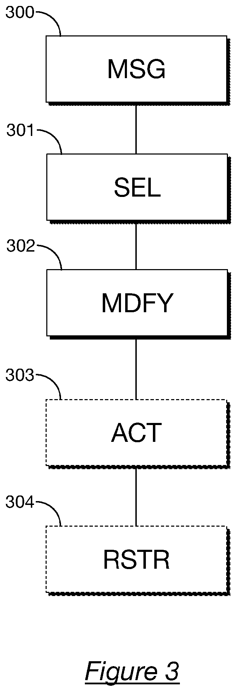

- La figure 3 illustre les principales étapes du procédé d'organisation selon un mode particulier de réalisation de l'invention, et

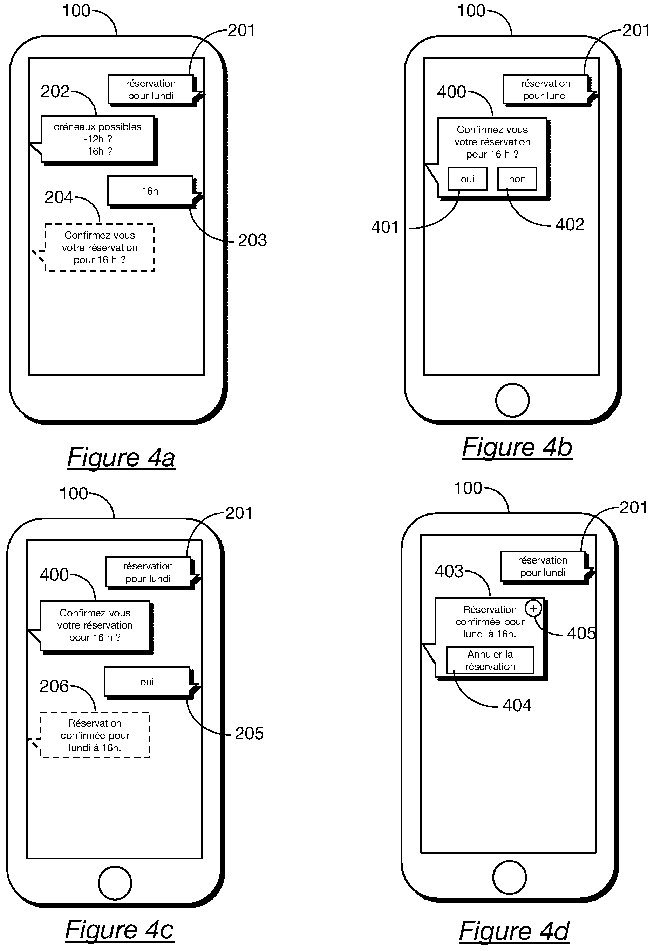

- La figure 4 représente de manière simplifiée l'architecture d'un dispositif adapté pour mettre en œuvre l'invention selon un mode de réalisation particulier.

### Description détaillée

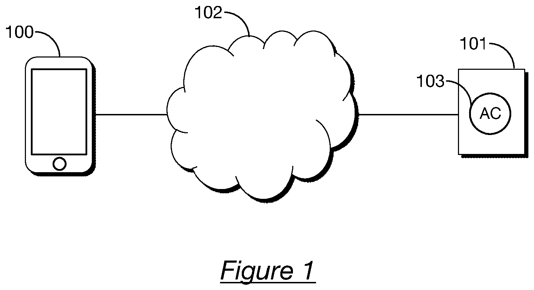

La figure 1 illustre une architecture adaptée pour mettre en œuvre le procédé de restitution selon un mode particulier de réalisation de l'invention. Une telle architecture comprend un terminal de communication 100 configuré pour communiquer au travers d'un réseau de communication 102 avec un serveur 101.

Le serveur 101 comprend un agent conversationnel 103 adapté pour répondre automatiquement à des messages envoyés par des terminaux, et en particulier pour répondre aux messages envoyés par le terminal 100. Ainsi, le terminal 100 peut interagir avec l'agent conversationnel. Ces interactions peuvent correspondre à une transaction, une négociation, une réservation ou tout autre échange permettant au terminal 100 ou à son utilisateur d'obtenir un service. L'agent conversationnel est programmé pour répondre aux messages selon une logique déterminée par un automate d'état. L'automate mis en œuvre dans l'agent conversationnel 102 est en particulier adapté pour effectuer des réservations pour le compte du terminal 100 par l'intermédiaire de messages échangés avec le terminal. Par exemple, l'agent conversationnel 102 permet au terminal 100 d'effectuer une réservation auprès d'un cinéma, d'un restaurant, d'un moyen de transport, d'un loueur de véhicule, etc... Selon d'autres exemples, un tel agent conversationnel peut être adapté pour commander des biens ou des services, obtenir une information particulière telle que des prévisions météorologiques ou encore être intégré à un équipement connecté tel qu'un distributeur automatique, borne de paiement d'un parking, etc...

Le réseau 102 est un réseau de communication permettant au terminal 100 de communiquer avec d'autres équipements, et en particulier avec le serveur 101. Le réseau de communication peut être un réseau cellulaire tel qu'un réseau GSM, 3G ou encore 4G, ou bien encore un réseau Internet auquel le terminal peut accéder par l'intermédiaire par exemple d'une connexion Wifi ou cellulaire.

Le terminal 100 est ici un téléphone mobile de type « smartphone » disposant de moyens de communications adaptés pour se connecter à un ou plusieurs réseaux de communication, tels que des réseaux Wifi ou des réseaux cellulaires, ainsi que d'une mémoire et d'un processeur adaptés pour exécuter des instructions de programme d'ordinateur. L'invention décrite ci-après peut toutefois être mise en œuvre sur d'autres terminaux, tels que sur une tablette, un objet connecté, un tableau de bord de véhicule ou encore un ordinateur personnel, par exemple dans un logiciel de messagerie. Le terminal 100 est en outre adapté pour communiquer selon au moins un protocole de messagerie instantanée avec d'autres terminaux ou dispositifs. Par exemple, le terminal 100 peut émettre et recevoir des messages de type SMS (Short Message Service) par l'intermédiaire d'un réseau cellulaire, ou encore mettre en œuvre le standard RCS (Rich Communication Suite), le protocole SIP SIMPLE, Jabber ou tout autre protocole adapté pour envoyer et recevoir des messages. En particulier, le terminal 100 peut échanger des messages instantanés avec le serveur 101 au travers du réseau 102.

La figure 2a illustre un échange de messages permettant d'effectuer une réservation au près d'un service. Cet exemple illustre une interaction simple avec un agent conversationnel. Il est entendu que d'autres interactions plus complexes, mettant en œuvre des échanges de messages plus ou moins nombreux peuvent être envisagées.

On distingue un premier message 201 émis par le terminal 100 à destination du serveur 101. Ce message comporte classiquement un identifiant du destinataire et un message textuel dans lequel l'utilisateur du terminal 100 demande à effectuer une réservation auprès d'un service. A la réception du message 201, l'agent conversationnel interprète le champ textuel et initie un automate d'état adapté pour traiter la demande de réservation. L'interprétation du message textuel est réalisée par des techniques classiques, telles que la reconnaissance de mots clefs compris dans le message ou à partir d'une analyse syntaxique et grammaticale du message.

L'agent conversationnel consulte une base de données de disponibilité et génère à partir des informations obtenues une réponse textuelle 202 à destination du terminal 100. Cette réponse comprend une proposition d'horaires disponibles et un identifiant de regroupement #id1. Cet identifiant de regroupement #id1 peut être associé à l'interaction en cours et inséré dans tous les messages relatifs à cette interaction. Selon une réalisation particulière de l'invention, l'identifiant de regroupement #id1 est associé à un sous-ensemble des étapes de l'interaction en cours, un autre identifiant pouvant être associé à un autre sous-ensemble d'étapes. L'identifiant de regroupement peut également être associé à un ou plusieurs messages, indépendamment de l'interaction en cours. Un tel identifiant permet d'identifier de manière non équivoque l'interaction en cours entre le terminal et l'agent conversationnel, ou un ensemble de messages et/ou d'étapes particuliers de l'interaction. Cet identifiant peut par exemple être construit à partir de l'identifiant d'appel du terminal 100 et de celui de l'agent conversationnel, auxquels est par exemple ajoutée l'heure d'émission du premier message. Selon un mode particulier de réalisation il peut s'agir d'un identifiant unique obtenu auprès d'un serveur dédié ou calculé par le terminal par un générateur pseudo-aléatoire connu de l'homme du métier. Le message textuel invite dans cet exemple l'utilisateur du terminal 100 à sélectionner un horaire parmi les horaires proposés. Selon une réalisation particulière, le message comporte une caractéristique particulière. En l'espèce, il s'agit d'une indication relative à un état d'avancement de l'interaction avec l'agent conversationnel. Cet état d'avancement dépend de l'automate mis en œuvre par l'agent conversationnel et comprend par exemple l'étape courante de l'interaction ainsi que le nombre d'étapes total. Ainsi, le message 202 peut comprendre une indication destinée à informer le terminal 100 que le processus de réservation est à l'étape 1 sur un nombre total de 3 étapes.

A la réception d'un tel message, l'utilisateur du terminal 100 répond en sélectionnant un horaire parmi les horaires disponibles communiqués par l'agent conversationnel dans le message 202. Cette réponse est émise par le terminal 100 vers le serveur 101 au moyen d'un message 203 comportant une référence à l'identifiant de regroupement #id1 obtenu dans le message 202 et un champ textuel comportant l'horaire sélectionné par l'utilisateur.

Suite à la réception du message 203, l'agent conversationnel génère et envoie un message 204 à destination du terminal 100 comportant l'identifiant de regroupement #id1 et un champ textuel demandant à l'utilisateur s'il confirme l'horaire de la réservation. Selon un mode de réalisation particulier, le message comprend en outre une caractéristique particulière telle qu'une indication relative à l'étape courante de l'interaction. En l'espèce, le message 204 comprend une indication selon laquelle le message correspond à l'étape 2 sur un nombre total de 3 étapes.

Le terminal confirme la réservation par l'envoi d'un message 205 à destination de l'agent conversationnel, le message comportant l'identifiant de regroupement #id1 associé à la procédure de réservation.

Enfin, suite à la réception du message 205, l'agent conversationnel transmet un message 206 confirmant la réservation. Selon un mode particulier de réalisation, le message 206 comprend une indication selon laquelle le message est le dernier message de l'interaction. En l'espèce, cette indication précise que ce message complète la troisième étape d'une interaction qui en comporte 3. Toutefois, toute indication permettant d'identifier le message comme étant le dernier message de l'interaction associée à l'identifiant de regroupement, comme par exemple une valeur booléenne positionnée dans le message, peut être utilisée.

Ainsi, l'utilisateur du terminal 100 peut effectuer une réservation auprès d'un service particulier en échangeant des messages sous la forme d'une conversation.

La figure 2b représente le terminal 100 sur l'écran duquel sont affichés, sous la forme d'une vue conversationnelle classique, les messages 201 à 206. Les messages envoyés par l'utilisateur du terminal 100 vers le serveur 101 sont affichés sur la droite, les messages reçus du serveur 101 sont affichés à gauche de l'écran. Ces messages sont affichés de manière chronologique, de façon à ce qu'un utilisateur du terminal puisse reconstituer le fil de discussion. Chaque message est en outre affiché dans une zone d'affichage qui lui est propre, dite « bulle de conversation » en référence aux bulles utilisées dans les bandes dessinées.

On constate que les différents messages échangés occupent un espace important sur l'écran du terminal, ainsi que dans sa mémoire. D'autre part, une telle présentation peut introduire une confusion chez l'utilisateur du terminal 100, notamment lorsque deux réservations sont réalisées en parallèle et que les messages relatifs à ces deux réservations sont intercalés.

L'invention vient améliorer la situation.

Les étapes du procédé d'organisation selon un mode particulier de réalisation de l'invention vont maintenant être décrites en références aux figures 3 et 4a, 4b et 4c.

La figure 3 illustre les principales étapes du procédé d'organisation selon un mode de réalisation particulier de l'invention.

La figure 4a représente l'écran du terminal 100 suite à la réception et l'affichage des messages 201, 202 et 203 décrit précédemment.

A l'étape 300, le terminal reçoit le message 204 représenté sur la figure 4a. Le message 204 représenté sur la figure 4a a été reçu mais n'est pas encore affiché.

A l'étape 301, le terminal 100 obtient l'identifiant de regroupement #id1 compris dans le message 204 et recherche les messages échangés précédemment avec l'agent conversationnel qui comprennent le même identifiant de regroupement. Il peut s'agir de messages reçus ou envoyés, de messages consécutifs ou non. Pour cela, le terminal consulte une base de données dans laquelle sont stockés les messages envoyés et reçus et sélectionne au moyen par exemple d'une requête SQL adaptée les messages possédant le même identifiant de regroupement. Les messages 202 et 203 sont sélectionnés car ils comprennent un identifiant de regroupement identique à celui compris dans le message 204.

A l'étape 302 le terminal modifie au moins une zone d'affichage correspondant à au moins un des messages sélectionnés, selon au moins une caractéristique du message échangé. Ainsi, au moins une des bulles de conversation correspondant aux messages sélectionnés est modifiée. La modification est effectuée en fonction d'une caractéristique du message 204.

Une telle caractéristique du message 204 est par exemple l'indication de changement d'état « 2/3 » du processus de réservation représenté sur le message 204 de la figure 2a. Lorsqu'une telle caractéristique est détectée dans le message, la modification de la zone d'affichage peut consister en une suppression des bulles de conversation correspondant aux messages sélectionnés. Ainsi, les messages relatifs aux étapes précédentes du processus de réservation ne sont plus visibles et la lisibilité de l'affichage est améliorée. La figure 4b illustre une telle modification de la zone d'affichage des messages 202 et 203 sélectionnés. Dans cet exemple, la modification de la zone d'affichage consiste à supprimer les bulles de conversation correspondantes. Ainsi, les bulles de conversations correspondant aux messages 202 et 203 sont supprimées ou masquées, avant que le message 204 ne soit affiché.

Toutefois, d'autres caractéristiques du message peuvent être utilisées pour déterminer le type de modification de la zone d'affichage. Pour cela, le terminal peut par exemple comprendre dans sa mémoire une table comprenant des associations entre des caractéristiques de messages et un type de modification d'affichage. Selon un mode particulier de réalisation, la caractéristique selon laquelle l'affichage est modifié consiste en un ensemble d'instructions d'affichage interprétables par le terminal. Il s'agit par exemple d'un fragment de code au format html, xml, javascript ou dans tout autre langage apte à être interprété et exécuté par un processeur du terminal.

Selon une réalisation particulière, la caractéristique du message est une indication relative au type de réponse attendue suite à la réception du message. Par exemple, le message peut comprendre une donnée indiquant que la réponse attendue est une réponse binaire de type « oui » ou « non ». Par exemple, le message 204 représenté sur la figure 2a comprend une telle donnée transmise dans un champ prévu à cet effet dont la valeur est « yn ». Lorsqu'une telle caractéristique est comprise dans un message reçu, la modification d'affichage peut consister par exemple en l'affichage dans la bulle de conversation d'éléments d'interface utilisateur, tels que des boutons « oui » et « non » permettant une réponse rapide au message par une simple action de l'utilisateur sur un de ces boutons. Une telle modification de l'affichage est représentée sur la figure 4b dans laquelle on distingue des boutons 401 et 402 affiché suite à la détection de la donnée « yn » comprise dans le message 204. Une action de l'utilisateur sur le bouton 401 provoque alors l'émission du message 205 représenté sur la figure 4c, le message comprenant l'identifiant de regroupement #id1 et un champ textuel « oui » à destination de l'agent conversationnel. L'émission d'un tel message provoque l'exécution des étapes 300, 301 et 302 du procédé d'organisation et provoque une modification de l'affichage de la bulle de conversation 400 correspondant au message 204 dont l'identifiant de regroupement #id1 est identique à celui du message 205. Une telle modification d'affichage consiste dans cet exemple à masquer les boutons de réponse 401 et 402 de la bulle de conversation 400 comme illustré sur la figure 4c. Ainsi l'émission d'un message particulier peut provoquer selon l'invention une modification d'une zone d'affichage associée à un message reçu précédemment.

La figure 4c représente des messages affichés sur le terminal 100 juste après la réception du message 206 émis par l'agent conversationnel. Le message 206 est alors reçu par le terminal, stocké dans une mémoire, mais il n'est pas encore affiché. La réception d'un tel message déclenche l'exécution du procédé d'organisation et en particulier des étapes 300, 301 et 302 décrites précédemment. Lors de l'étape 301, les messages 202 et 203 sont sélectionnés à partir de leur identifiant de regroupement lors de l'étape 301. Le message 206 comprend en outre une caractéristique apte à provoquer une modification de l'affichage de la bulle de conversation associée au message 205 et de la bulle de conversation 400 résultant d'une modification d'affichage suite à la réception du message 204 comme décrit en référence à la figure 4b.

Le message 206 comprend en outre une indication selon laquelle le message est le dernier message d'une série de messages associés au même identifiant de regroupement. En l'espèce, le message 206 comprend une information sur la progression du processus de réservation, ladite information indiquant que le message correspond à la troisième étape d'une interaction comportant 3 étapes. Toute autre indication permettant au terminal 100 de déduire que le message est le dernier message de l'interaction peut également être utilisée. Il peut s'agir par exemple d'une valeur booléenne qui indique un dernier message lorsqu'elle est vraie.

La figure 4d illustre une modification de l'affichage des messages sélectionnés consécutive à la réception du message 206, la modification étant réalisée selon la caractéristique selon laquelle le message est le dernier de l'interaction. Cette modification comporte le masquage des bulles de conversations associées aux messages et l'affichage dans une nouvelle bulle de conversation 403 du message 206 reçu et d'un élément d'interaction, tel qu'un bouton 404. Une action sur le bouton 404 provoque par exemple l'envoi d'un message prédéfini permettant d'annuler la réservation. Tout autre modification d'affichage est envisageable, comme par exemple un changement de couleur de la bulle de conversation, ou encore l'affichage d'un pictogramme particulier.

Ainsi, grâce au procédé selon l'invention, le nombre de messages affichés sur l'écran du terminal à l'issue de la réservation a pu être réduit par rapport à l'affichage classique représenté sur la figure 2b.

Selon un mode particulier de réalisation, le procédé comporte une étape d'annulation des modifications de la au moins une zone d'affichage lorsqu'une interaction sur une zone d'affichage modifiée est détectée. Pour cela, le procédé détecte, lors d'une étape 303, une interaction de l'utilisateur sur un élément d'interaction tel que le bouton 405. En variante, l'interaction peut être détectée lors d'une action de l'utilisateur sur la bulle de conversation elle-même. De cette façon, il est inutile d'afficher un élément d'interaction tel que l'élément 405 et l'utilisation de l'écran du terminal est optimisée davantage. Selon encore une autre variante, l'élément d'interaction permettant la détection d'une action de l'utilisateur n'est pas associé à une bulle de conversation particulière et provoque un rétablissement de l'affichage de tous les messages échangés avec l'agent conversationnel, y compris l'affichage de messages relatifs à des réservations ou autres interaction effectuées précédemment.

Lorsqu'une interaction est détectée à l'étape 303, le terminal annule les modifications réalisées précédemment sur les bulles de conversation. Par exemple, les messages sont affichés selon une vue conversationnelle classique telle qu'illustrée sur la figure 2b. L'annulation des modifications peut être temporaire ou définitive. Lorsque l'annulation est temporaire, les modifications sont de nouveau appliquées après l'expiration d'un délai prédéfini ou à la détection d'un événement particulier, tel qu'une action de l'utilisateur sur un élément d'interface graphique prédéterminé.

Selon un mode particulier de réalisation, la caractéristique est une donnée relative à l'importance du message. Par exemple, il peut s'agir d'une information positionnée dans un champ prévu à cet effet dont la valeur peut par exemple être « basse » ou « haute ». Une modification associée à une telle caractéristique peut être par exemple un changement de la couleur de la bulle de conversation ou du message.

Selon un mode de réalisation particulier, l'étape de modification d'au moins une zone d'affichage comprend le masquage des messages sélectionnés à l'étape 301, et l'affichage d'un message représentatif des messages masqués dans une nouvelle bulle de conversation. Un message représentatif peut consister en une concaténation des messages sélectionnés en un seul message ou encore un résumé des messages échangés. Par exemple, les messages 201 et 203 représentés sur la figure 2b peuvent être concaténés et affichés dans une unique bulle de conversation afin d'optimiser l'espace occupé sur l'écran et améliorer la lisibilité de l'échange. Pour cela, les messages 201 et 203 peuvent partager un même identifiant de regroupement distinct de l'identifiant de regroupement #id1. De cette façon, les modifications d'affichage liées aux échanges de messages comportant l'identifiant #id1 n'ont pas d'influence sur les messages 201 et 203. En revanche, l'émission du message 203 peut provoquer une modification de l'affichage de la bulle de conversation du message 201 qui consiste en la concaténation du message 203 et 201 et l'affichage de ce message concaténé dans une unique bulle de conversation.

Selon un mode de réalisation particulier, l'étape de modification d'au moins une zone d'affichage comprend le remplacement dans une zone d'affichage d'au moins un message sélectionné par le message échangé.

Selon un mode de réalisation particulier, le procédé est tel qu'il comporte en outre une étape de restitution d'une notification sur le terminal, la notification étant restituée selon la au moins une caractéristique du message échangé. De manière classique ; un terminal peut émettre une notification lorsqu'un message est reçu. Par exemple, à la réception d'un message, le terminal peut émettre un son, une vibration, ou afficher un message sur l'écran d'accueil du terminal lorsque ce dernier est verrouillé. Une telle notification vise à attirer l'attention de l'utilisateur sur le fait qu'un nouveau message est disponible. Selon l'invention, la notification est restituée en fonction d'une caractéristique du message reçu ou d'un message émis. Par exemple, lorsque la caractéristique comprend une indication selon laquelle le message est un message clôturant une interaction, la notification restituée peut être différente d'une notification restituée pour un message qui n'est pas le dernier message d'une interaction. Pour cela, le terminal peut rechercher dans le message une caractéristique particulière et consulter une table de correspondance pour déterminer la manière de restituer la notification, comme par exemple sélectionner un son ou une séquence particulière de vibrations. Ainsi, l'attention de l'utilisateur peut être attirée sur la réception d'un message particulier dénotant par exemple qu'une commande est confirmée ou qu'une réponse de l'utilisateur est requise pour que le processus de transaction puisse être poursuivi.

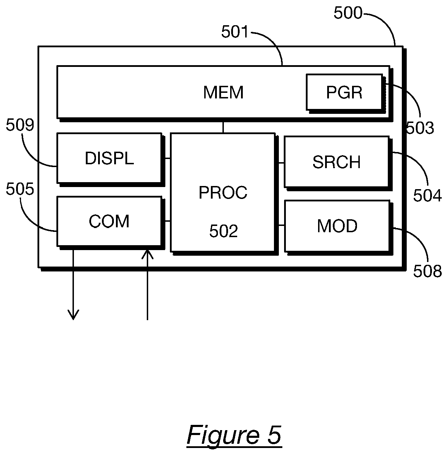

La figure 5 illustre, selon un mode particulier de réalisation de l'invention, un dispositif 500 mettant en œuvre le procédé d'organisation.

Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé d'organisation tel que décrit dans l'invention en référence à la figure 3, et notamment les étapes d'échange d'un nouveau message, de sélection, parmi les messages de la conversation, d'au moins un message dont l'identifiant de regroupement correspond à l'identifiant de regroupement du message échangé, et lorsqu'au moins un message est sélectionné, de modification d'au moins une zone d'affichage sur l'écran du terminal correspondant à au moins un des messages sélectionnés, selon au moins une caractéristique du message échangé.

À l'initialisation, les instructions du programme d'ordinateur 503 sont par exemple chargées dans une mémoire RAM (Random Access Memory en anglais) avant d'être exécutées par le processeur de l'unité de traitement 502. Le processeur de l'unité de traitement 502 met en œuvre les étapes du procédé d'organisation selon les instructions du programme d'ordinateur 503.

Pour cela, la mémoire 501 est en outre adaptée pour mémoriser au moins un message échangé avec un agent conversationnel, le message comportant un identifiant de regroupement et une caractéristique particulière.

Le dispositif 500 comprend en outre des moyens de communication 505, comme par exemple une interface réseau COM, permettant au dispositif de se connecter à un réseau de télécommunication et d'échanger des données avec d'autres dispositifs par l'intermédiaire du réseau de télécommunications, et en particulier d'échanger des messages avec un agent conversationnel.

Le dispositif 500 comprend également un module de sélection 504 mis en œuvre à la réception ou à l'émission d'un nouveau message comprenant un identifiant de regroupement. Un tel module est adapté pour sélectionner parmi les messages stockés dans la mémoire, au moins un message dont l'identifiant de regroupement correspond à l'identifiant de regroupement du nouveau message. Un tel module est par exemple mis en œuvre par des instructions de programme d'ordinateur configurées pour effectuer une recherche dans une mémoire ou une base de données et exécutées par le processeur PROC du dispositif. Par exemple, le module 504 peut exécuter une requête SQL (Simple Query Language en anglais) configurée pour sélectionner des messages possédant un identifiant de regroupement particulier dans une base de données.

Le dispositif comprend en outre un module d'affichage 508 adapté pour modifier au moins une zone d'affichage sur un écran 509 du terminal correspondant à au moins un des messages sélectionnés, selon au moins une caractéristique du message échangé. Un tel module est par exemple mis en œuvre par des instructions de programme d'ordinateur adaptées pour déterminer une zone d'affichage associée à un ou plusieurs messages particuliers, et modifier le contenu affiché dans cette zone, les instructions de programme d'ordinateur étant exécutées par le processeur PROC. Les instructions de programme d'ordinateur sont par exemple configurées pour masquer ou remplacer le contenu affiché dans une zone d'affichage particulière.

## Revendications

1. Procédé d'organisation d'une pluralité de messages d'une conversation de messagerie instantané entre un terminal et un agent conversationnel **caractérisé en ce qu'**au moins un message de la pluralité de messages comprend un identifiant de regroupement identifiant une transaction en cours avec l'agent conversationnel, la transaction comportant une pluralité d'états successifs, le procédé comportant les étapes suivantes lorsqu'un nouveau message comportant un identifiant de regroupement est échangé:
- sélection, parmi la pluralité des messages de la conversation, d'au moins un message dont l'identifiant de regroupement correspond à l'identifiant de regroupement du nouveau message échangé,
Lorsqu'au moins un message de la pluralité de messages est sélectionné :
- Modification d'au moins une zone d'affichage sur l'écran du terminal correspondant à au moins un des messages sélectionnés en supprimant au moins un des messages sélectionnés, selon au moins une caractéristique du nouveau message échangé.

2. Procédé selon la revendication 1 dans lequel la au moins une caractéristique du nouveau message échangé comprend une indication relative à un état d'avancement de la transaction avec l'agent conversationnel.

3. Procédé selon l'une quelconque des revendications précédentes comportant en outre une étape de restitution d'une notification sur le terminal, la notification étant restituée selon la au moins une caractéristique du nouveau message échangé.

4. Procédé selon l'une quelconque des revendications précédentes dans lequel la au moins une caractéristique du nouveau message échangé comprend une indication selon laquelle le message est le dernier message d'une série de messages associés au même identifiant de regroupement.

5. Procédé selon l'une quelconque des revendications précédentes dans lequel l'étape de modification d'au moins une zone d'affichage comprend le remplacement dans une zone d'affichage d'au moins un message sélectionné par le nouveau message échangé.

6. Procédé selon l'une quelconque des revendications précédentes dans lequel l'étape de modification d'au moins une zone d'affichage comprend le masquage d'au moins un message sélectionné, et l'affichage d'un message représentatif du au moins un message masqué.

7. Procédé selon l'une quelconque des revendications précédentes comportant une étape d'annulation de la modification de la au moins une zone d'affichage lorsqu'une interaction sur une zone d'affichage modifiée est détectée.

8. Dispositif d'organisation d'une pluralité de messages d'une conversation de messagerie instantané entre un terminal et un agent conversationnel **caractérisé en ce qu'**il comporte les modules suivants :
- un module de communication, adapté pour échanger au travers d'un réseau de communication, au moins un message comprenant un identifiant de regroupement identifiant une transaction en cours avec l'agent conversationnel, la transaction comportant une pluralité d'états successifs,
- une mémoire, adaptée pour mémoriser des messages comprenant un identifiant de regroupement,
- un module de sélection mis en œuvre à la réception ou à l'émission d'un nouveau message comprenant un identifiant de regroupement, le module étant adapté pour sélectionner parmi les messages stockés dans la mémoire, au moins un message dont l'identifiant de regroupement correspond à l'identifiant de regroupement du nouveau message,
- un module d'affichage mis en œuvre lorsqu'au moins un message est sélectionné, pour modifier au moins une zone d'affichage sur l'écran du terminal correspondant à au moins un des messages sélectionnés en supprimant au moins un des messages sélectionnés, selon au moins une caractéristique du nouveau message échangé.

9. Terminal comportant un dispositif d'organisation selon la revendication 8.

10. Programme d'ordinateur comportant des instructions pour l'exécution du procédé d'organisation selon l'une quelconque des revendications 1 à 7, lorsque le programme est exécuté par un processeur.

11. Support d'informations lisible par un ordinateur sur lequel est enregistré un programme d'ordinateur comprenant des instructions pour l'exécution des étapes du procédé d'organisation selon l'une des revendications 1 à 7.

## Patentansprüche

1. Verfahren zur Organisation einer Vielzahl von Nachrichten eines Instant-Messaging-Gesprächs zwischen einem Endgerät und einem Gesprächsagenten, **dadurch gekennzeichnet, dass** mindestens eine Nachricht der Vielzahl von Nachrichten eine Gruppierungskennung beinhaltet, die eine laufende Transaktion mit dem Gesprächsagenten identifiziert, wobei die Transaktion eine Vielzahl von aufeinanderfolgenden Zuständen umfasst, wobei das Verfahren die folgenden Schritte umfasst, wenn eine neue Nachricht, die eine Gruppierungskennung umfasst, ausgetauscht wird:
- Auswählen, aus der Vielzahl der Nachrichten des Gesprächs, mindestens einer Nachricht, deren Gruppierungskennung der Gruppierungskennung der neuen ausgetauschten Nachricht entspricht,
wenn mindestens eine Nachricht der Vielzahl von Nachrichten ausgewählt wird:
- Modifizieren mindestens eines Anzeigebereichs auf dem Bildschirm des Endgeräts, der mindestens einer der ausgewählten Nachrichten entspricht, durch das Löschen mindestens einer der ausgewählten Nachrichten, gemäß mindestens einer Eigenschaft der neuen ausgetauschten Nachricht.

2. Verfahren nach Anspruch 1, wobei die mindestens eine Eigenschaft der neuen ausgetauschten Nachricht eine Angabe über einen Fortschrittszustand der Transaktion mit dem Gesprächsagenten beinhaltet.

3. Verfahren nach einem der vorhergehenden Ansprüche, ferner umfassend einen Schritt des Wiedergebens einer Benachrichtigung auf dem Endgerät, wobei die Benachrichtigung gemäß der mindestens einen Eigenschaft der neuen ausgetauschten Nachricht wiedergegeben wird.

4. Verfahren nach einem der vorhergehenden Ansprüche, wobei die mindestens eine Eigenschaft der neuen ausgetauschten Nachricht eine Angabe beinhaltet, gemäß der die Nachricht die letzte Nachricht einer Reihe von Nachrichten ist, die mit der gleichen Gruppierungskennung assoziiert sind.

5. Verfahren nach einem der vorhergehenden Ansprüche, wobei der Schritt des Modifizierens mindestens eines Anzeigebereichs das Ersetzen, in einem Anzeigebereich, mindestens einer ausgewählten Nachricht durch die neue ausgetauschte Nachricht beinhaltet.

6. Verfahren nach einem der vorhergehenden Ansprüche, wobei der Schritt des Modifizierens mindestens eines Anzeigebereichs das Ausblenden mindestens einer ausgewählten Nachricht und das Anzeigen einer Nachricht, die für die mindestens eine ausgeblendete Nachricht repräsentativ ist, beinhaltet.

7. Verfahren nach einem der vorhergehenden Ansprüche, umfassend einen Schritt des Annullierens der Modifizierung des mindestens einen Anzeigebereichs, wenn eine Interaktion in einem modifizierten Anzeigebereich erkannt wird.

8. Vorrichtung zur Organisation einer Vielzahl von Nachrichten eines Instant-Messaging-Gesprächs zwischen einem Endgerät und einem Gesprächsagenten, **dadurch gekennzeichnet, dass** sie die folgenden Module umfasst:
- ein Kommunikationsmodul, das dazu angepasst ist, über ein Kommunikationsnetzwerk mindestens eine Nachricht auszutauschen, die eine Gruppierungskennung beinhaltet, die eine laufende Transaktion mit dem Gesprächsagenten identifiziert, wobei die Transaktion eine Vielzahl von aufeinanderfolgenden Zuständen umfasst,
- einen Speicher, der dazu angepasst ist, Nachrichten, die eine Gruppierungskennung beinhalten, zu speichern,
- ein Auswahlmodul, das beim Empfangen oder Senden einer neuen Nachricht, die eine Gruppierungskennung beinhaltet, ausgeführt wird, wobei das Modul dazu angepasst ist, aus den in dem Speicher abgespeicherten Nachrichten mindestens eine Nachricht auszuwählen, deren Gruppierungskennung der Gruppierungskennung der neuen Nachricht entspricht,
- ein Anzeigemodul, das ausgeführt wird, wenn mindestens eine Nachricht ausgewählt wird, um gemäß mindestens einer Eigenschaft der neuen ausgetauschten Nachricht mindestens einen Anzeigebereich auf dem Bildschirm des Endgeräts, der mindestens einer der ausgewählten Nachricht entspricht, zu modifizieren, indem mindestens eine der ausgewählten Nachrichten gelöscht wird.

9. Endgerät, das eine Vorrichtung zur Organisation nach Anspruch 8 umfasst.

10. Computerprogramm, das Anweisungen umfasst, die bei der Ausführung des Programms durch einen Prozessor das Verfahren zur Organisation nach einem der Ansprüche 1 bis 7 ausführen.

11. Computerlesbarer Informationsträger, auf dem ein Computerprogramm aufgezeichnet ist, das Anweisungen zur Ausführung der Schritte des Verfahrens zur Organisation nach einem der Ansprüche 1 bis 7 beinhaltet.

## Claims

1. Method for organizing a plurality of messages of an instant messaging conversation between a terminal and a conversational agent, **characterized in that** at least one message of the plurality of messages comprises a grouping identifier identifying an ongoing transaction with the conversational agent, the transaction comprising a plurality of successive states, the method comprising the following steps when a new message comprising a grouping identifier is exchanged:
- selection, from among the plurality of messages of the conversation, of at least one message whose grouping identifier corresponds to the grouping identifier of the new message exchanged,
When at least one message of the plurality of messages is selected:
- Modification of at least one display area on the screen of the terminal corresponding to at least one of the messages selected by deleting at least one of the messages selected, according to at least one characteristic of the new message exchanged.

2. Method according to Claim 1, in which the at least one characteristic of the new message exchanged comprises an indication relating to a state of progress of the transaction with the conversational agent.

3. Method according to either one of the preceding claims, further comprising a step of rendering a notification on the terminal, the notification being rendered according to the at least one characteristic of the new message exchanged.

4. Method according to any one of the preceding claims, in which the at least one characteristic of the new message exchanged comprises an indication according to which the message is the last message of a series of messages associated with the same grouping identifier.

5. Method according to any one of the preceding claims, in which the step of modifying at least one display area comprises the replacing in a display area of at least one message selected with the new message exchanged.

6. Method according to any one of the preceding claims, in which the step of modifying at least one display area comprises the masking of at least one selected message, and the displaying of a message representative of the at least one masked message.

7. Method according to any one of the preceding claims, comprising a step of cancelling the modification of the at least one display area when an interaction on a modified display area is detected.

8. Device for organizing a plurality of messages of an instant messaging conversation between a terminal and a conversational agent, **characterized in that** it comprises the following modules:
- a communication module, adapted to exchange, through a communication network, at least one message comprising a grouping identifier identifying an ongoing transaction with the conversational agent, the transaction comprising a plurality of successive states,
- a memory, adapted to store messages comprising a grouping identifier,
- a selection module implemented when receiving or sending a new message comprising a grouping identifier, the module being adapted to select, from among the messages stored in the memory, at least one message whose grouping identifier corresponds to the grouping identifier of the new message,
- a display module implemented when at least one message is selected, so as to modify at least one display area on the screen of the terminal corresponding to at least one of the messages selected by deleting at least one of the messages selected, according to at least one characteristic of the new message exchanged.

9. Terminal comprising an organizing device according to Claim **8.**

10. Computer program comprising instructions for the execution of the organizing method according to any one of Claims 1 to 7, when the program is executed by a processor.

11. Information medium readable by a computer on which is recorded a computer program comprising instructions for the execution of the steps of the organizing method according to one of Claims 1 to 7.
